# EUROPEAN PATENT APPLICATION

(11) **EP 4 246 692 A1**
(43) Date of publication of application: **20.09.2023**
(21) Application number: 22858724.2
(22) Date of filing: 17.08.2022
(51) Int. Cl.: H01M 50/308, H01M 50/249

(54) **BATTERY PACK AND DEVICE INCLUDING SAME**

(30) Priority: 17.08.2021 KR 20210107933; 16.08.2022 KR 20220102059
(71) Applicant: LG Energy Solution, Ltd., Seoul 07335 (KR)
(72) Inventor: CHUN, Yongho, Daejeon 34122 (KR); SHIN, Juhwan, Daejeon 34122 (KR); LEE, Taekyeong, Daejeon 34122 (KR); JANG, Byung Do, Daejeon 34122 (KR); LEE, Hyoungsuk, Daejeon 34122 (KR); KIM, Donghyun, Daejeon 34122 (KR)
(74) Representative: Plasseraud IP
(86) International application number: PCT/KR2022/012219
(87) International publication number: WO 2023/022487

(57) **Abstract**

A battery pack according to one embodiment of the present disclosure includes: a battery module that houses battery cells and discharges gas generated from the battery cells; a pack housing that houses the battery module and is provided with an outlet port for discharging gas discharged from the battery module at one surface thereof; and a venting member that covers the outlet port at an outer surface of the pack housing, couples to the outer surface of the pack housing, and discharges gas inside the pack housing. The venting member is detachably coupled to the outer surface of the pack housing.

## Description

### [TECHNICAL FIELD]

### Cross Citation with Related Application(s)

This application claims the benefit of Korean Patent Application No. 10-2021-0107933 filed on August 17, 2021 and Korean Patent Application No. 10-2022-0102059 filed on August 16, 2022 in the Korean Intellectual Property Office, the entire contents of which are incorporated herein by reference.

The present disclosure relates to a battery pack and a device including the same, and more particularly, to a battery pack provided with a venting device for gas discharge, and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is mounted in a metal can, and a pouch-type secondary battery in which the electrode assembly is mounted in a pouch of an aluminum laminate sheet.

In the case of a secondary battery used for small-sized devices, two to three battery cells are arranged, but in the case of a secondary battery used for a middle- or large-sized device such as an automobile, a battery module in which a large number of battery cells are electrically connected is used. In such a battery module, a large number of battery cells are connected to each other in series or parallel to form a cell assembly, thereby improving capacity and output. One or more battery modules can be mounted together with various control and protection systems such as a BMS (battery management system) and a cooling system to form a battery pack.

When the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a middle or large-sized battery module included in a vehicle battery pack, it is frequently exposed to direct sunlight and may be placed under high-temperature conditions such as summer or desert areas. Therefore, in order to take countermeasures against the case where a thermal runaway phenomenon occurs inside the battery module or battery pack, there is a need to provide a battery pack with a venting device capable of discharging high-temperature internal gas.

### [DETAILED DESCRIPTION OF THE INVENTION]

### [Technical Problem]

It is an object of the present disclosure to provide a battery pack in which an integrated venting device is configured to be attachable/detachable at the outside of the battery pack, thereby ensuring convenience in assembly and safety against a thermal runaway phenomenon, and a device including the same.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery pack comprising: a battery module that houses battery cells and discharges gas generated from the battery cells; a pack housing that houses the battery module and is provided with an outlet port for discharging gas discharged from the battery module at one surface thereof; and a venting member that covers the outlet port at an outer surface of the pack housing, couples to the outer surface of the pack housing, and discharges gas inside the pack housing. The venting member is detachably coupled to the outer surface of the pack housing.

The battery pack may comprise a fastening part that couples the pack housing and the venting member. The fastening part may comprise a bolt part passing through the venting member and a nut part into which the bolt part is inserted and fastened. Any one of the bolt part or the nut part may contact and couple to one surface of the pack housing, and the other may be detachably fastened to any one of the bolt part or the nut part at the outside of the pack housing.

The bolt part may comprise a fixed bolt part configured to contact and couple to one surface of the pack housing, and the nut part may comprise an outer nut part detachably fastened to the fixed bolt part at the outside of the pack housing.

A housing hole may be formed in the pack housing, and the fixed bolt part may pass through the housing hole while contacting and coupling to the inner surface of the pack housing.

The fixed bolt part may comprise a head part configured to contact and couple to the inner surface of the pack housing and a screw part extending from the head part and passing through the housing hole.

The fixed bolt part may contact and couple to the outer surface of the pack housing.

A through hole may be formed in the venting member, and the fixed bolt part may pass through the through hole to be fastened to the outer nut part.

The fixed bolt part may be coupled to one surface of the pack housing by a welding junction or an adhesive.

The nut part may comprise a fixed nut part configured to contact and couple to the inner surface of the pack housing, and the bolt part may comprise an outer bolt part detachably fastened to the fixed nut part at the outside of the pack housing.

A housing hole may be formed in the pack housing, and the fixed nut part may contact and couple to the inner surface of the pack housing so as to cover the housing hole.

The fixed nut part may comprise a columnar main body formed with screw threads on the inner surface, and an attachment part configured to extend from the main body part and contact and couple to the inner surface of the pack housing.

A through hole may be formed in the venting member, and the outer bolt part may sequentially pass through the through hole and the housing hole to be fastened to the fixed nut part.

The fixed bolt part may be coupled to one surface of the pack housing by a welding junction or an adhesive.

The venting member may be slidably and detachably coupled to the outer surface of the pack housing.

The pack housing may comprise an assembly member having one end fixed to an outer surface of the pack housing. An assembly groove may be formed in the venting member, and an assembly protrusion may be formed in the assembly member. The assemble member rotates in a direction in which the venting member is located, and the assembly protrusion engages with the assemble groove, so that the assemble member and the venting member can be coupled.

The venting member may comprise a venting cap in which a venting hole is formed, a support ring in contact with the pack housing and a rupture disk located between the venting cap and the support ring.

The battery pack may further comprise a pack housing cover that covers an opened upper part of the pack housing.

According to another embodiment of the present disclosure, there is provided a device comprising the above-mentioned battery pack.

### [Advantageous Effects]

According to embodiments of the present disclosure, a venting member for discharging internal gas is configured to be attachable/detachable at the outside of the battery pack, thereby being able to ensure convenience in assembly.

Also, since the venting member having a problem in gas discharge function can be easily replaced, it is possible to enhance safety against a thermal runaway phenomenon.

In addition, since the venting member can be replaced without releasing the sealing of the already sealed battery pack, the cost can be reduced and the processability of manufacture can be improved.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a battery pack according to one embodiment of the present disclosure;
Fig. 2 is an exploded perspective view which enlarges and shows a section "A" of Fig. 1 at a different angle;
Figs. 3 and 4 are cross-sectional views which shows a cross section taken along the cutting line B-B' of Fig. 2;
Fig. 5a is an enlarged view of a fixed bolt part and a pack housing according to one embodiment of the present disclosure;
Fig. 5b is an enlarged view of a fixed bolt part and a pack housing according to another embodiment of the present disclosure;
Fig. 6 is a side view showing a venting member according to one embodiment of the present disclosure;
Fig. 7 is an exploded perspective view showing a venting member according to one embodiment of the present disclosure;
Fig. 8 is an exploded perspective view showing a venting member and a pack housing according to another embodiment of the present disclosure;
Figs. 9 and 10 are cross-sectional views which shows a cross section taken along the cutting line C-C' of Fig. 8;
Fig. 11 is an enlarged view of a fixed nut part and a housing hole according to another embodiment of the present disclosure;
Figs. 12 and 13 are partial perspective views showing a venting member according to a comparative example of the present disclosure, respectively;
Figs. 14 and 15 are a cross-sectional perspective view and a cross-sectional view showing a venting member and a pack housing according to another embodiment of the present disclosure, respectively; and
Figs. 16 and 17 are a cross-sectional perspective view and a cross-sectional view showing a venting member and a pack housing according to another embodiment of the present disclosure, respectively.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

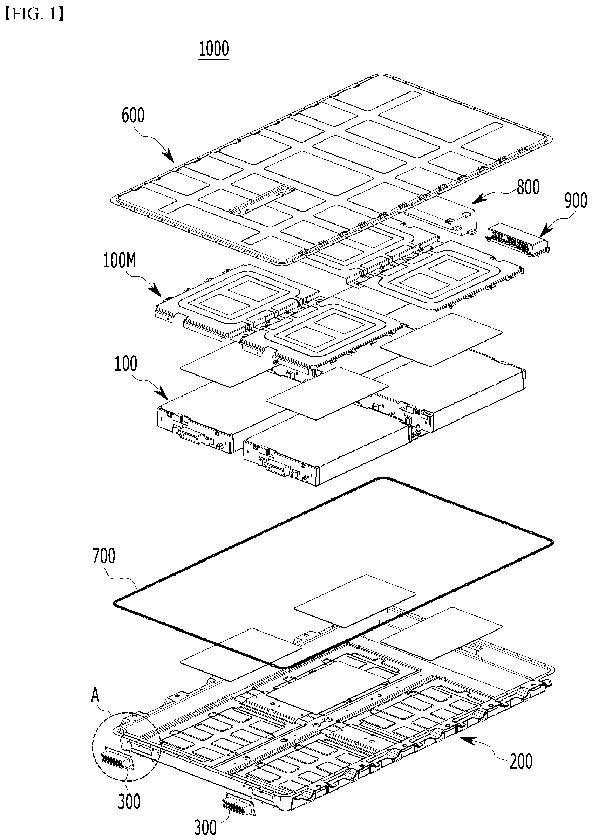

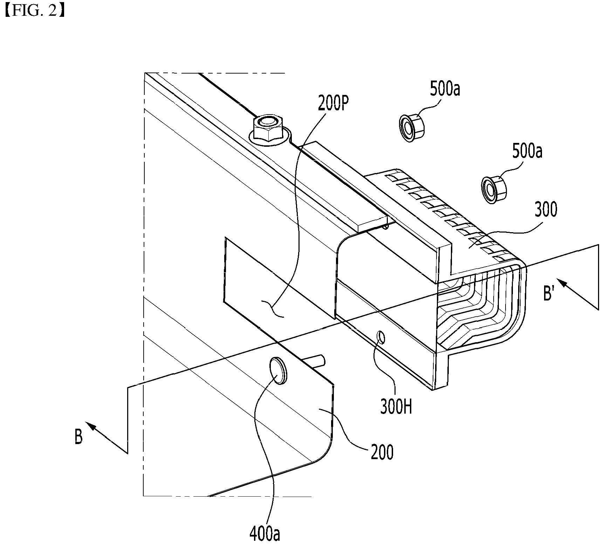

Fig. 1 is a perspective view showing a battery pack according to one embodiment of the present disclosure. Fig. 2 is an exploded perspective view which enlarges and shows a section "A" of Fig. 1 at a different angle.

Referring to Figs. 1 and 2, the battery pack 1000 according to one embodiment of the present disclosure includes a battery module 100 that houses battery cells (not shown) and discharges gas generated from the battery cells, a pack housing 200 that houses the battery module 100 and is provided with an outlet port 200P for discharging gas discharged from the battery module 100 at one surface thereof, and a venting member 300 that covers the outlet port 200P at an outer surface of the pack housing 200, couples to the outer surface of the pack housing 200, and discharges gas inside the pack housing 200. The venting member 300 is detachably coupled to the outer surface of the pack housing 200.

Hereinafter, as an embodiment of the venting member 300 detachably coupled to the outer surface of the pack housing 200, a coupling method utilizing a fastening part will be described in detail.

The battery pack 1000 according to the present embodiment may further include fastening parts 400a and 500a that couple the pack housing 200 and the venting member 300.

The battery module 100 may include a plurality of battery cells (not shown) therein. Although not specifically shown in the figure, such battery cells may be pouch-type secondary battery cells, prismatic secondary battery cells, or cylindrical secondary battery cells.

A plurality of battery modules 100 may be housed in the pack housing 200. As an example, Fig. 1 shows an appearance in which four battery modules 100 are arranged. Such battery modules 100 may be fixed to the pack housing 200 through a mounting member 100M.

The pack housing 200 may be a structure having an opened upper part, and the pack housing cover 600 may cover the opened upper part of the pack housing 200. The battery pack 1000 according to the present embodiment may include a sealing member 700 that is located between the pack housing 200 and the pack housing cover 600 for internal sealing. A space between the pack housing 200 in which the battery module 100 is housed and the pack housing cover 600 may be sealed in this way. As described above, when a thermal runaway phenomenon or the like occurs in the battery cell, a large amount of high-temperature gas is generated and discharged from the battery module 100, and the pressure inside the sealed pack housing 200 rises. A venting member 300 is provided in the pack housing 200 to discharge internal gas.

Next, the venting member 300 and the fastening parts 400a and 500a according to the present embodiment will be described in detail with reference to Figs. 2 to 4.

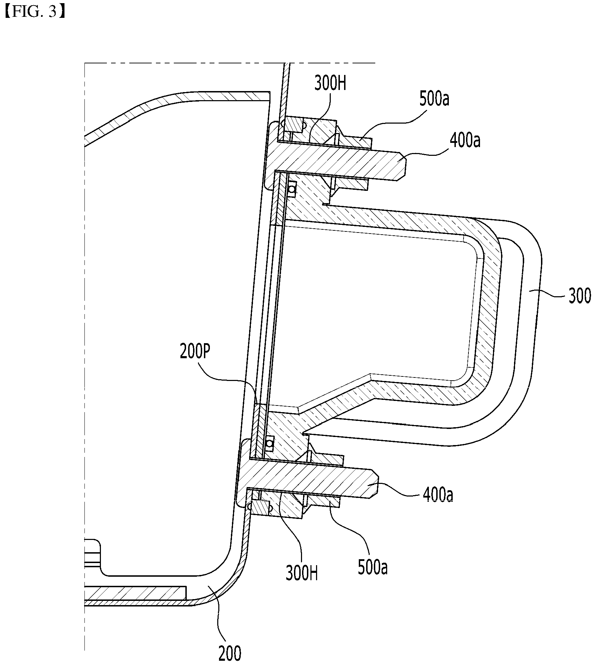

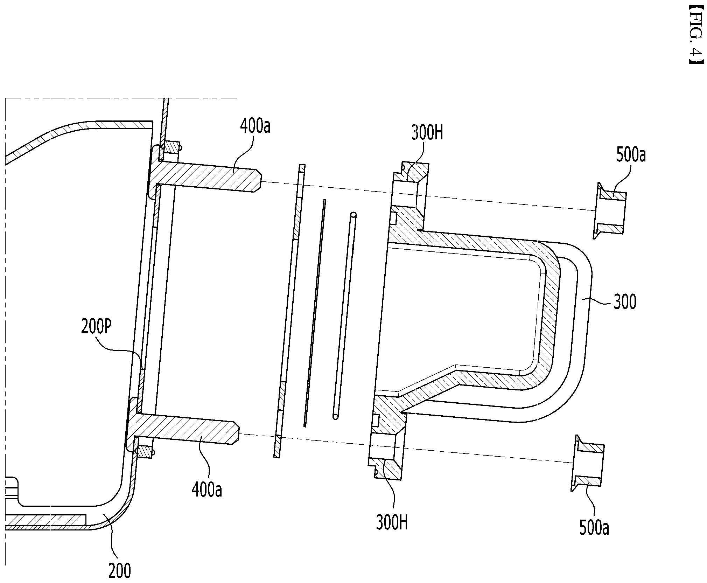

Figs. 3 and 4 are cross-sectional views which shows a cross section taken along the cutting line B-B' of Fig. 2. Specifically, Fig. 3 is a cross-sectional view showing a state in which the venting member 300 according to the present embodiment is coupled to the pack housing 200, and Fig. 4 is an exploded cross-sectional view showing a state in which the venting member 300 according to the present embodiment is not coupled to the pack housing 200 for convenience of explanation.

Referring to Figs. 2 to 4, the venting member 300 according to the present embodiment is mounted on the pack housing 200 through fastening parts 400a and 500a at the outside of the pack housing 200. A penetration type outlet port 200P is formed on one surface of the pack housing 200, and the venting member 300 may be coupled to the pack housing 200 so as to cover the outlet port 200P at the outer surface of the pack housing 200. As used herein, the outer surface of the pack housing 200 refers to a surface that faces the outer space rather than the space inside the pack housing 200 in which the battery modules 100 are housed, and the inner surface of the pack housing 200 refers to another surface that faces the space inside the pack housing 200 in which the battery modules 100 are stored.

In the inside of the battery pack 1000, high-temperature gas may be generated due to a thermal runaway phenomenon or the like. One example of a thermal runaway phenomenon is as follows. Physical, thermal, and electrical damage to the battery cell including overcharging may occur, and the internal pressure of the battery cells can increase. As an example, when the battery cell is a pouch-type secondary battery cell, the battery cell exceeds the fusion strength limit of the pouch-type cell case, and high-temperature heat, venting gas and the like generated in the battery cell may be ejected to the outside of the battery cell.

A thermal runaway phenomenon that occurs in one of the battery cells can be extended to other battery cells due to the convection effect, and eventually, high-temperature gas and flame may be generated inside the battery module 100. The generated high-temperature gas and flame may induce another thermal runaway phenomenon in adjacent battery modules. Ultimately, a large amount of high-temperature gas may be generated inside the battery pack 1000. High-temperature gas generated inside the sealed battery pack 1000 may be ejected to the outside through the outlet port 200P and the venting member 300.

At this time, the venting member 300 according to the present embodiment is detachable from the pack housing 200 at the outside of the pack housing 200. Specifically, the fastening part according to the present embodiment includes a bolt part passing through the venting member 300 and a nut part into which the bolt part is inserted and fastened. Any one of the bolt part or the nut part may contact and couple to one surface of the pack housing 200, and the other may be detachably fastened to any one of the bolt part or the nut part at the outside of the pack housing 200.

First, a bolt part configured to contact and couple to one surface of the pack housing 200 and a nut part detachably coupled to the bolt part at the outside of the pack housing 200 will be described as one embodiment of the present disclosure.

The bolt part according to the present embodiment may include a fixed bolt part 400a configured to contact and couple to one surface of the pack housing 200, and the nut part may include an outer nut part 500a detachably fastened to the fixed bolt part 400a at the outside of the pack housing 200. The fixed bolt part 400a according to the present embodiment may be in a state of being already attached and fixed to the pack housing 200.

The venting member 300 may be assembled with such fixed bolt parts 400a at the outside of the pack housing 200. A through hole 300H may be formed in the venting member 300, the fixed bolt part 400a passes through the through hole 300H and can be fastened with an outer nut part 500a that is located outside the pack housing 200. Although not specifically shown in the figure, a screw thread is formed on the outer surface of the fixed bolt part 400a and the inner surface of the outer nut part 500a, respectively, and the bolt/nut coupling between the fixed bolt part 400a and the outer nut part 500a is performed. In this manner, the venting member 300 according to the present embodiment can be mounted to the pack housing 200 .

Next, the form in which the fixed bolt part 400a contacts and couple to the pack housing 200 will be described in detail.

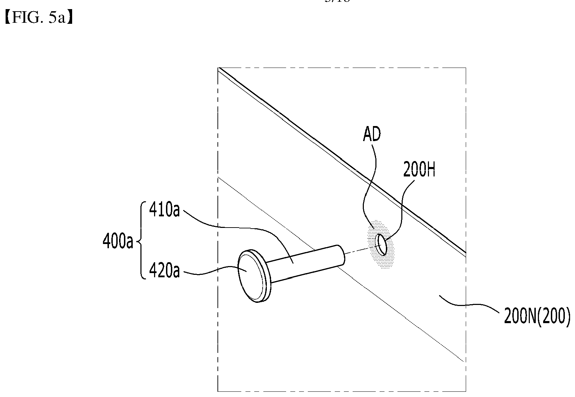

Fig. 5a is an enlarged view of a fixed bolt part and a pack housing according to one embodiment of the present disclosure. Specifically, the state before the fixed bolt part 400a is attached and fixed to the pack housing 200 is illustrated.

Referring to Fig. 5a, a housing hole 200H may be formed in the pack housing 200, and the fixed bolt part 400a may pass through the housing hole 200H while contacting and coupling to the inner surface 200N of the pack housing 200. More specifically, the fixed bolt part 400a may include a head part 420a configured to contact and couple to the inner surface 200N of the pack housing 200 and a screw part 410a extending from the head part 420a and passing through the housing hole 200H.

The screw part 410a may pass through the housing hole 200H and direct to the outside at the outer surface of the pack housing 200. Although not specifically shown in the figure, a screw thread may be formed on an outer peripheral surface of the screw part 410a. The head part 420a may be attached to the pack housing 200. As shown in Fig. 5a, the head part 420a contacts and couples to an attachment area AD that surrounds the housing hole 200H, so that the fixed bolt part 400a can be attached and fixed to the pack housing 200. For example, the fixed bolt part 400a can be coupled to the inner surface 200N of the pack housing 200 by a welding junction or an adhesive. In particular, the head part 420a can be coupled to the attachment area AD of the inner surface 200N of the pack housing 200 by a welding junction or an adhesive.

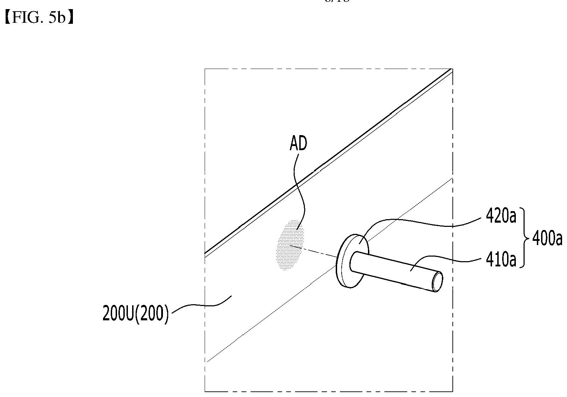

Fig. 5b is an enlarged view of a fixed bolt part and a pack housing according to another embodiment of the present disclosure. Referring to Fig. 5b, in another embodiment of the present disclosure, the fixed bolt part 400a may contact and couple to the outer surface 200U of the pack housing 200. Specifically, this is a method in which a housing hole is not formed in the pack housing 200, but the fixed bolt part 400a is directly attached to the outer surface 200U of the pack housing 200. The fixed bolt part 400a may include a screw part 410a and a head part 420a, wherein the head part 420a may contact and couple to the outer surface 200U of the pack housing 200. For example, the head part 420a may be coupled to the attachment area AD of the outer surface 200U of the pack housing 200 by a welding junction or an adhesive.

Referring again to Figs. 3 and 4, the venting member 300 according to the present embodiment can be easily detached by releasing the coupling between the fixed bolt part 400a and the outer nut part 500a. In this manner, since the venting member 300 is a structure that can be easily detached and attached at the outside of the pack housing 200, the venting member 300 can be easily replaced after the operation of the venting member 300, which will be described later, or when a foreign matter is caught in the venting member 300 or it causes trouble in terms of operation. Even if the mounting of the venting member 300 is released, the fixed bolt part 400a is continuously attached and fixed to the pack housing 200. Since the fixed bolt part 400a is fixed to the pack housing 200, it is not necessary to open the pack housing cover 600 (see Fig. 1) in the process of replacing the venting member 300. That is, there is an advantage in that the venting member 300 can be replaced while maintaining a sealed state between the pack housing 200 and the pack housing cover 600.

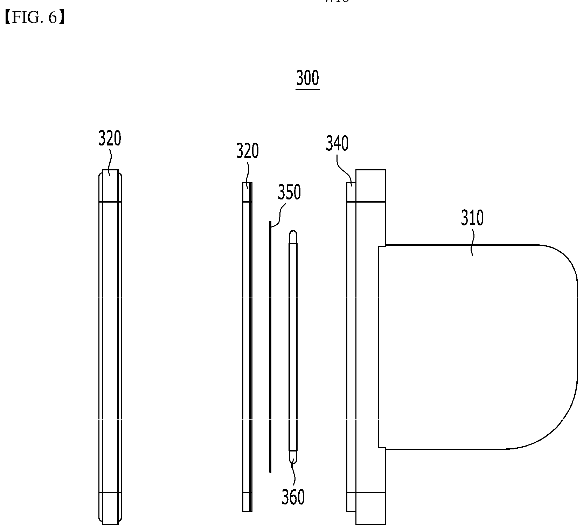

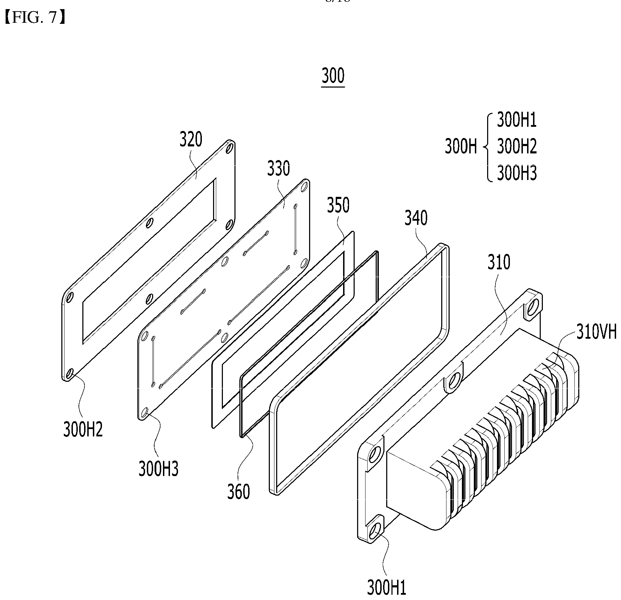

Next, the venting member 300 according to the present embodiment will be described in detail with reference to Figs. 6 and 7.

Fig. 6 is a side view showing a venting member according to one embodiment of the present disclosure. Fig. 7 is an exploded perspective view showing a venting member according to one embodiment of the present disclosure.

Referring to Figs. 6 and 7 together with Fig. 4, the venting member 300 according to one embodiment of the present disclosure may include a venting cap 310, a support ring 320, a rupture disk 330, a gasket 340, a protection ring 350 and a sealing ring 360. From the pack housing, the support ring 320, the rupture disk 330, the protection ring 350, the sealing ring 360, the gasket 340, and the venting cap 310 may be arranged in this order.

The venting cap 310 is a member that is located farthest from the pack housing among the venting members 300, and may be formed with a venting hole 310VH for discharging internal gas. Fig. 7 shows that the venting holes 310VH in the form of a lattice are formed, but the shape of the venting holes 310VH is not particularly limited.

The support ring 320 is a member that is located closest to the pack housing among the venting members 300 and contacts the pack housing, and may be previously assembled before members such as the venting cap 310 are mounted on the pack housing. It performs the function of supporting the back pressure when mounted.

The rupture disk 330 is located between the venting cap 310 and the support ring 320, and may be a member that ruptures when pressure rises. Under normal operating conditions, the venting member 300 does not operate by being blocked by the rupture disk 330. That is, the outlet port 200P of the pack housing 200 is blocked by the rupture disk 330, and the inside of the pack housing 200 is in a sealed sate. After that, gas is generated and internal pressure is generated, which causes the rupture disk 330 to rupture, whereby the venting member 300 operates, that is, gas can be discharged through the venting member 300. In one example, the rupture disk 330 may be designed to rupture and operate when the back pressure is 0.1 BAR or more and the static pressure is 0.2 BAR or more.

The gasket 340 is for maintaining airtightness when the venting cap 310 is mounted, and may be located between the venting cap 310 and the rupture disk 330. The gasket 340 is provided in a shape corresponding to the outer periphery of the venting cap 310 to increase airtightness.

The protection ring 350 is for vibration protection and foreign matter penetration prevention, and may include, for example, a Teflon material. The sealing ring 360 is a member arranged to prevent water from penetrating through the rupture disk 330 and improve sealing performance.

Meanwhile, as described above, the through hole 300H through which the fixed bolt part 400a passes is formed in the venting member 300, a first through hole 300H1 may be formed in the venting cap 310, a second through hole 300H2 may be formed in the support ring 320, a third through hole 300H3 may be formed in the rupture disk 330. In one example, Fig. 7 shows a state in which each six pieces of the first through holes 300H1, the second through holes 300H2 and the third through holes 300H3 are formed. In the venting member 300, the through-hole 300H according to the present embodiment can be finally formed while the venting cap 310, the support ring 320 and the rupture disk 330 come into close contact so that the first through-hole 300H1, the second through-hole 300H2, and the third through-hole 300H3 correspond to each other. That is, the fixed bolt part 400a according to the present embodiment may sequentially pass through the second through hole 300H2, the third through hole 300H3, and the first through hole 300H1.

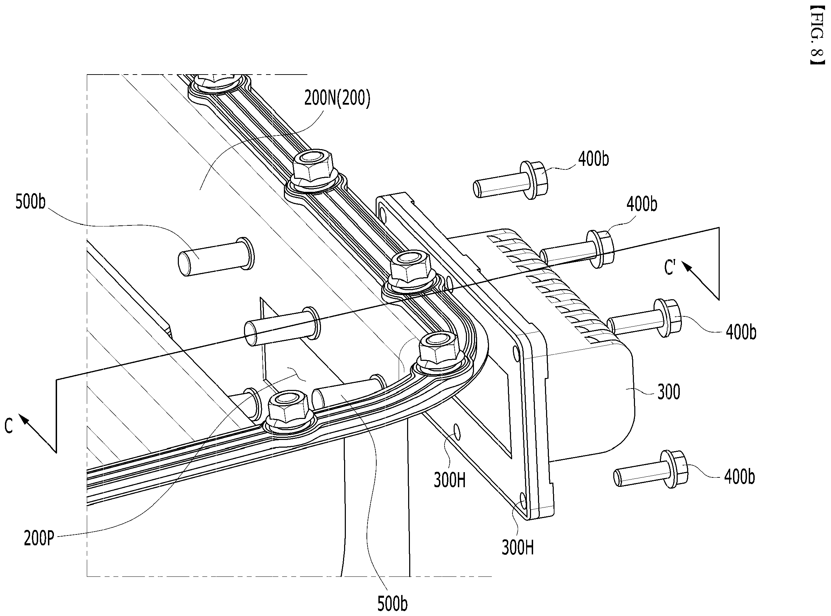

Next, a venting member and a fastening part according to another embodiment of the present disclosure will be described in detail with reference to Figs. 8 to 10.

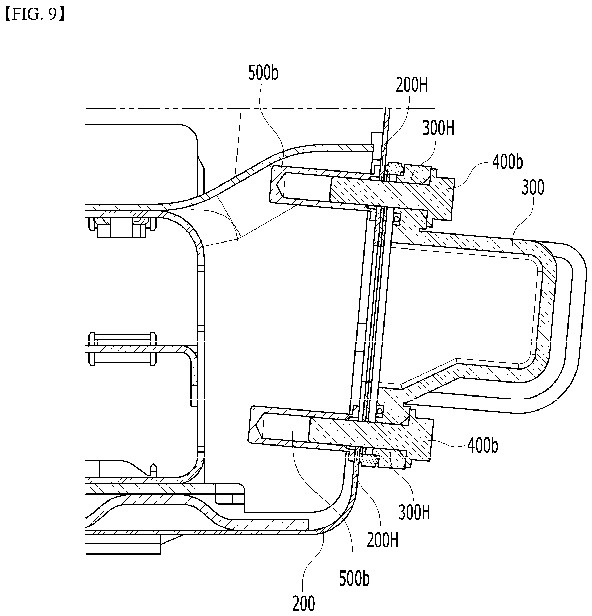

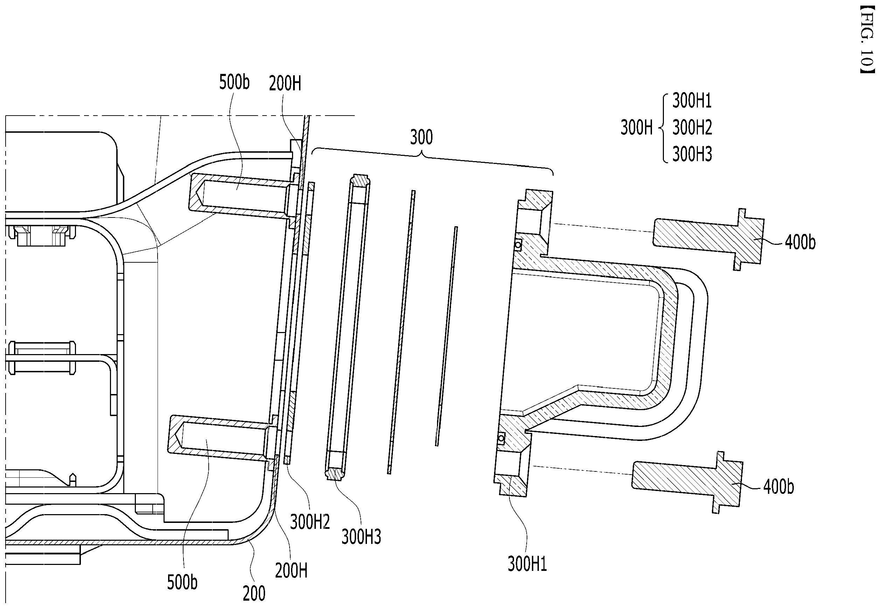

Fig. 8 is an exploded perspective view showing a venting member and a pack housing according to another embodiment of the present disclosure. Figs. 9 and 10 are cross-sectional views which shows a cross section taken along the cutting line C-C' of Fig. 8. Specifically, Fig. 9 is a cross-sectional view showing a state in which the venting member 300 according to the present embodiment is coupled to the pack housing 200, and Fig. 10 is an exploded cross-sectional view illustrating a state in which the venting member 300 according to the present embodiment is not coupled to the pack housing 200 for convenience of explanation.

Referring to Figs. 8 to 10, the venting member 300 according to another embodiment of the present disclosure is identical to the venting member 300 described above with in conjunction with Figs. 2 to 4 in that it is mounted on the pack housing 200 at the outside of the pack housing 200. A description relating to the structure itself of the venting member is also omitted because it overlaps with those described with reference to Figs. 6 and 7.

According to the embodiment shown in Figs. 8 to 10, the venting member 300 can be coupled to the pack housing 200 by fastening parts 400b and 500b. The fastening part according to the present embodiment includes a bolt part passing through the venting member 300 and a nut part into which the bolt part is inserted and fastened. In another embodiment of the present disclosure, a nut part configured to contact and couple to one surface of the pack housing 200 and a bolt part detachably fastened to the nut part at the outside of the pack housing 200 will be described.

The nut part according to another embodiment of the present disclosure may include a fixed nut part 500b configured to contact and couple to the inner surface of the pack housing 200, and the bolt part may include an outer bolt part 400b that is detachably fastened to the fixing nut part 500b at the outside of the pack housing 200. The fixed nut part 500b according to the present embodiment may be in a state of being already attached to and fixed to the pack housing 200.

Specifically, a housing hole 200H may be formed in the pack housing 200, and the fixed nut part 500b may contact and couple to the inner surface of the pack housing 200 so as to cover the housing hole 200H. An outer bolt part 400b that has passed through the venting member 300 at the outside of the pack housing 200 may be assembled with the fixed nut part 500b. A through hole 300H may be formed in the venting member 300, and an outer bolt part 400b may sequentially pass through the through hole 300H and the housing hole 200H to be fastened to the fixed nut part 500b. Although not specifically shown in the figure, screw threads are formed on the outer surface of the outer bolt part 400b and the inner surface of the fixed nut part 500b, respectively. A bolt/nut coupling between the outer bolt part 400b and the fixed nut part 500b is performed. In this manner, the venting member 300 according to the present embodiment can be mounted on the pack housing 200.

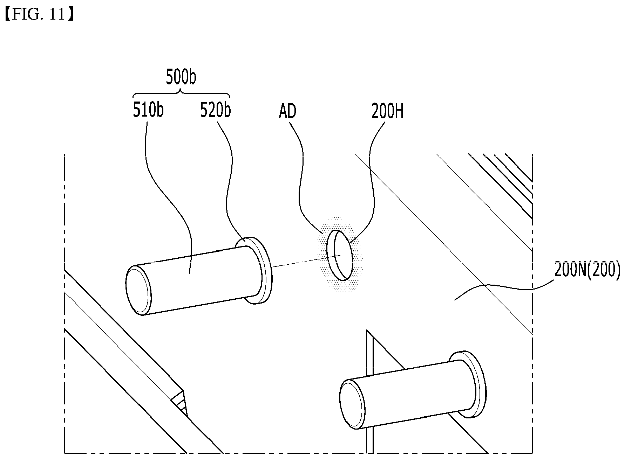

Fig. 11 is an enlarged view of a fixed nut part and a housing hole according to another embodiment of the present disclosure. Specifically, the state before the fixed nut part 500b is attached and fixed to the pack housing 200 is illustrated.

Referring to Fig. 11, a fixed nut part 500b according to another embodiment of the present disclosure may include a columnar main body part 510b formed with screw threads on the inner surface thereof and an attachment portion 520b extending from the main body part 510b and contacting and coupling to the inner surface 200N of the pack housing 200. As described above, the outer bolt part 400b that has passed sequentially through the through hole 300H of the venting member 300 and the housing hole 200H of the pack housing 200 is inserted into the main body part 510b, and the bolt/nut coupling can be performed.

The attachment part 520b is a member that is formed on the outer periphery of the opening area of the main body part 510b, and can be attached to the inner surface 200N of the pack housing 200. By attaching the attachment part 520b to the attachment area AD surrounding the housing hole 200H, the fixed nut part 500b may cover the housing hole 200H and be attached and fixed to the pack housing 200. For example, the fixed nut part 500b may be coupled to the inner surface 200N of the pack housing 200 by a welding junction or an adhesive. In particular, the attachment part 520b may be attached to the attachment area AD of the pack housing 200 by a welding junction or an adhesive.

The venting member 300 according to the present embodiment can be easily detached by releasing the coupling between the outer bolt part 400b and the fixed nut part 500b. In this manner, since the venting member 300 is a structure that can be easily detached and attached at the outside of the pack housing 200, the venting member 300 can be easily replaced after the operation of the venting member 300, or when a foreign matter is caught in the venting member 300 or it causes trouble in terms of operation. Even if the mounting of the venting member 300 is released, the fixed nut part 500 b is continuously attached and fixed to the pack housing 200. Since the fixed nut part 500b is fixed to the pack housing 200, it is not necessary to open the pack housing cover 600 (see Fig. 1) in the process of replacing the venting member 300. That is, there is an advantage in that the venting member 300 can be replaced while maintaining a sealed state between the pack housing 200 and the pack housing cover 600.

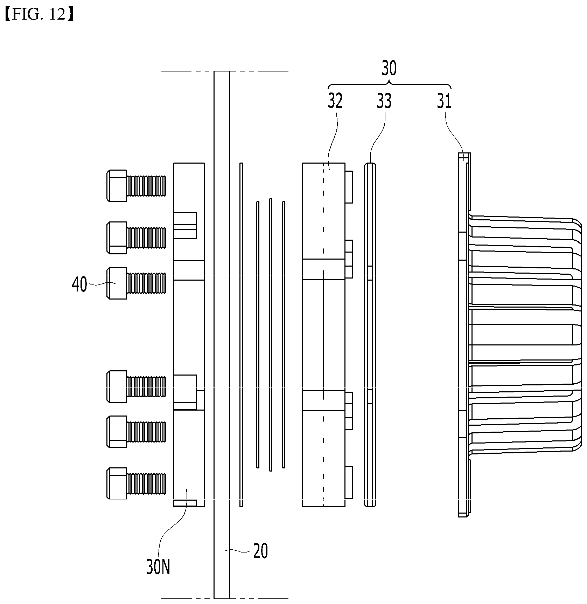

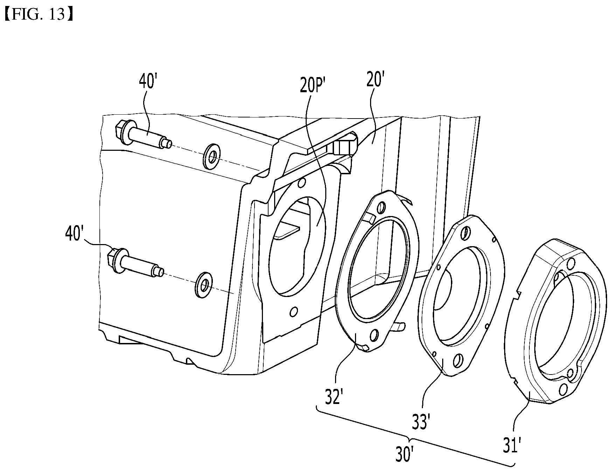

Next, advantages of the venting member mounting method according to embodiments of the present disclosure will be described again in comparison with the mounting method of the venting member according to the comparative example of the present disclosure shown in Figs. 12 and 13.

Figs. 12 and 13 are partial perspective views showing a venting member according to a comparative example of the present disclosure, respectively.

First, referring to Fig. 12, the venting member 30 according to the comparative example is mounted on the pack housing 20 in a shape of being assembled together with the internal member 30N inside the pack housing 20. Specifically, the venting member 30 may include an external member 31 having an exhaust hole, an assembly member 32 assembled with a bolt 40 and a rupture disk 33 disposed between the external member 31 and the assembly member 32. The internal member 30N and the bolt 40 are located inside the pack housing 20, wherein the bolt 40 passes through the internal member 30N and the pack housing 20 to be assembled with the venting member 30. The bolt 40 is not in a state where it is coupled or fixed to the pack housing 20.

In order to replace the venting member 30, a process of tightening and loosening the bolt 40 located inside the pack housing 20 is essential. That is, the mounting of the venting member 30 to be replaced is released by first loosening the bolt 40, and then the bolt 40 must be tightened again to assemble the new venting member 30. The bolt 40 according to the present comparative example is not the form that is fixed and attached to the pack housing 20. If the pack housing 20 and the pack housing cover (not shown) are coupled and the sealing of the battery pack is completed, in order to replace the venting member 30, an additional process is required to re-open the sealing between the pack housing 20 and the pack housing cover (not shown) to open the interior of the battery pack. That is, in order to replace the venting member 30, it is troublesome to release the coupling between the pack housing 20 and the pack housing cover (not shown) again. This is an unfavorable structure in terms of both cost and process.

Next, referring to Fig. 13, the venting member 30' according to the present comparative example is mounted to the pack housing 20' with a bolt 40' inside the pack housing 20', similarly to the venting member 30 described above. Specifically, the venting member 30' may include an external member 31' having an exhaust hole formed therein, an assembly member 32', and a rupture disk 33' disposed between the external member 31' and the assembly member 32'. The venting member 30' is mounted at a position corresponding to the outlet port 20P' formed in the pack housing 20'. The bolt 40 'is located inside the pack housing 20', and a bolt 40' passes through the pack housing 20' to assembled with the venting member 30'. Likewise, the bolt 40' is not in a state where it is coupled or fixed to the pack housing 20'.

In order to replace the venting member 30', a process of tightening and loosening the bolt 40' located inside the pack housing 20' is required. That is, the bolt 40' is first loosened to release the mounting of the venting member 30' to be replaced, and then the bolt 40' must be tightened again to assemble a new venting member 30'. That is, the bolt 40' according to the present comparative example is not in a state of being fixed and attached to the pack housing 20. If the pack housing 20' and the pack housing cover (not shown) are coupled and the sealing of the battery pack is completed, in order to replace the venting member 30', an additional process is required to release the sealing between the pack housing 20' and the pack housing cover (not shown) to open the interior of the battery pack, and reassemble the pack housing 20 and the pack housing cover (not shown) after replacing the venting member. That is, similarly to the comparative example of Fig. 12, in order to replace the venting member 30', it is inconvenient to release the coupling between the pack housing 20' and the pack housing cover (not shown) again. This is an unfavorable structure in terms of both cost and process.

On the other hand, unlike the comparative examples, the venting member 300 according to the present embodiment has a structure which is mounted using a fixed bolt part 400a (see Fig. 2 ) or a fixed nut part 500b (see Fig. 8) in a state coupled to the pack housing 200. Therefore, when replacing the venting member 300, it is not necessary to adjust the fixed bolt part 400a or the fixed nut part 500b that is located inside the pack housing 200. In other words, it is not necessary to release the coupling between the pack housing 200 and the pack housing cover 600 in order to replace the venting member 300. This means that the battery pack does not need to be opened again to replace the venting member 300. The battery pack according to the present embodiments has advantages in terms of cost reduction or management, because the venting member 300 having a problem can be easily replaced without sealing the battery pack, unlike the comparative examples.

Next, in one embodiment of the venting member 300 detachably coupled to the outer surface of the pack housing 200, the sliding coupling method will be described in detail.

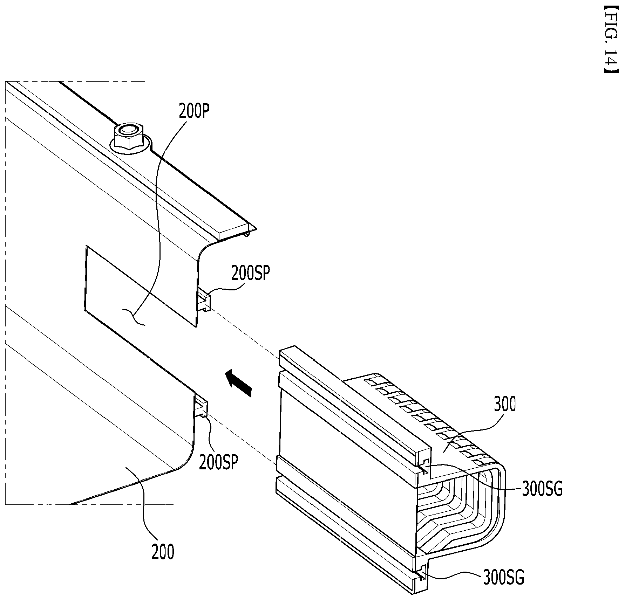

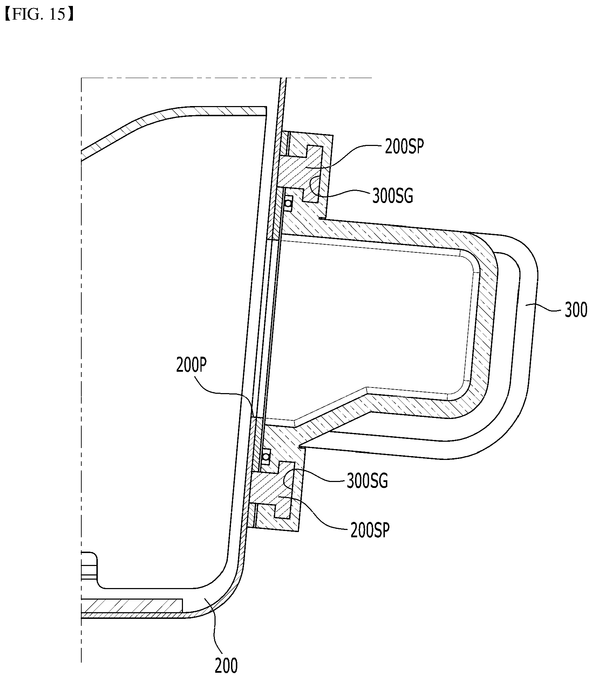

Figs. 14 and 15 are a cross-sectional perspective view and a cross-sectional view showing a venting member and a pack housing according to another embodiment of the present disclosure, respectively. In particular, Fig. 15 shows a state in which the venting member of Fig. 14 and the pack housing are coupled.

Referring to Figs. 14 and 15, the venting member 300 according to another embodiment of the present disclosure may be slidably and detachably coupled to the outer surface of the pack housing 200. Specifically, a sliding groove may be formed on one of the venting member 300 and the pack housing 200, a sliding protrusion may be formed on the other, and a sliding protrusion may be slidably coupled to the sliding groove.

As an example, Figs. 14 and 15 show that a sliding groove 300SG is formed in the venting member 300, and the sliding protrusion 200SP is formed on the outer surface of the pack housing 200. The sliding protrusion 200SP has a protruding shape corresponding to the inner shape of the sliding groove 300SG. The sliding protrusion 200SP may be attached to the outer surface of the pack housing 200 through an adhesive or the like to be fixed to the outer surface of the pack housing 200.

Since both the sliding protrusion 200SP and the sliding groove 300SG are formed along one direction, a sliding coupling can be performed while the sliding protrusion 200SP is inserted into the sliding groove 300SG along one direction. Further, after the venting member 300 is coupled to the outer surface of the pack housing 200, the coupling between the venting member 300 and the pack housing 200 can be released while the venting member 300 moves in the opposite direction to the one direction.

In this manner, it is possible to realize a structure in which the venting member 300 can be easily detached and attached at the outside of the pack housing 200 by a sliding method. Therefore, the venting member 300 can be easily replaced after the operation of the venting member 300, or when a foreign matter is caught in the venting member 300 or it causes trouble in terms of operation. Even if the mounting of the venting member 300 is released, the sliding projection 200SP is continuously attached and fixed to the pack housing 200.

Due to the sliding coupling method of the venting member 300, it is not necessary to open the pack housing cover 600 (see Fig. 1) in the process of replacing the venting member 300. That is, there is an advantage in that the venting member 300 can be replaced while maintaining a sealed state between the pack housing 200 and the pack housing cover 600.

Meanwhile, only the embodiment in which the sliding groove 300SG is formed in the venting member 300 and the sliding protrusion 200SP is formed in the pack housing 200 is illustrated, but conversely, it is also possible to form a sliding protrusion on the venting member 300 and a sliding groove on the outer surface of the pack housing 200.

Next, as an embodiment of the venting member 300 detachably coupled to the outer surface of the pack housing 200, a physical coupling method will be described in detail.

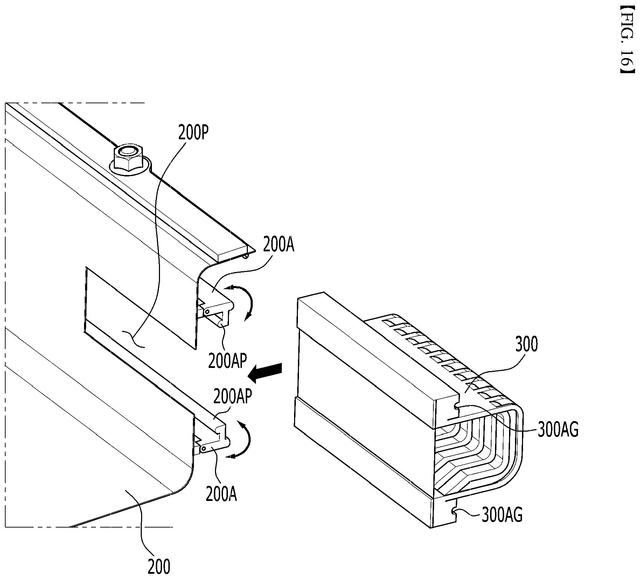

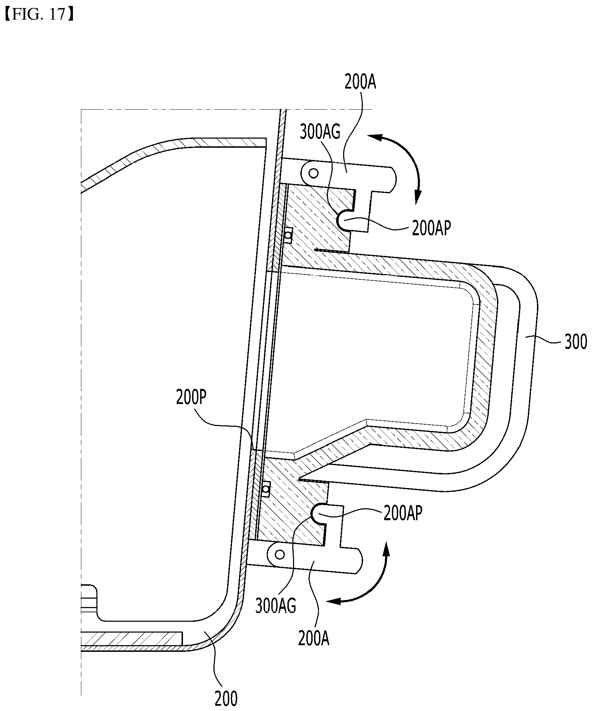

Figs. 16 and 17 are a cross-sectional perspective view and a cross-sectional view showing a venting member and a pack housing according to another embodiment of the present disclosure, respectively. In particular, Fig. 17 shows a state in which the venting member of Fig. 15 and the pack housing are coupled.

Referring to Figs. 16 and 17, the pack housing 200 according to the present embodiment may include an assembly member 200A having one end fixed to an outer surface of the pack housing 200. An assembly groove 300AG may be formed in the venting member 300, and an assembly protrusion 200AP engaging with the assembly groove 300AG may be formed in the assembly member 200A.

As the assembly member 200A rotates in the direction where the venting member 300 is located, and the assembly protrusion 200AP engages with the assembly groove 300AG, so that the assembly member 200A and the venting member 300 can be coupled. One end of the assembly member 200A may be attached to the outer surface of the pack housing 200 through an adhesive or the like, so that the assembly member 200A is fixed to the outer surface of the pack housing 200. The assembly member 200A has a rotatable form, but in one example, it may have a hinge structure. In another example, one portion of the assembly member 200A may have a portion reduced in thickness and be configured to rotate about the portion reduced in thickness.

The assembly member 200A is preferably provided as a pair. The pair of assembly members 200A may be located opposite to each other with the venting member 300 interposed therebetween. It is preferable that a pair of assembly grooves 300AG are also provided in the venting member 300 corresponding to the pair of assembly members 200A. When the assembly member 200A is coupled to the venting member 300, the pair of assembly members 200A rotate in opposite directions, that is, in the direction in which the venting member 300 is located, and the coupling may be achieved while the assembly protrusions 200AP of the pair of assembly members 200A engage with each of the pair of assembly grooves 300AG.

On the other hand, as shown in the figure, a vertically protruding portion is formed from the assembly member 200A, and the assembly protrusion 200AP may be a portion vertically protruding from the protruding portion. Further, the assembly groove 300AG may be a groove recessed in a direction perpendicular to the outer surface of the pack housing 200. In this configuration, the assembly protrusion 200AP and the assembly groove 300AG must be engaged so that the venting member 300 can be coupled and fixed to the outer surface of the pack housing 200. In particular, by applying a predetermined force to the assembly member 200A, the assembly protrusion 200AP may be forcibly fitted into the assembly groove 300AG.

Further, after the venting member 300 is coupled to the outer surface of the pack housing 200, the coupling between the venting member 300 and the pack housing 200 may be released while the assembly member 200A rotates in the direction opposite to the direction in which the venting member 300 is located. The assembly protrusion 200AP may be forcibly separated from the assembly groove 300AG by applying a predetermined force to the assembly member 200A.

In this manner, it is possible to realize a structure in which the venting member 300 is easily detached and attached at the outside of the pack housing 200 through the physical coupling method of the assembly member 200A. Therefore, the venting member 300 can be easily replaced after the operation of the venting member 300, or when a foreign matter is caught in the venting member 300 or it causes trouble in terms of operation. Even if the mounting of the venting member 300 is released, the assembly member 200A is continuously attached and fixed to the pack housing 200.

Due to the physical coupling method between the venting member 300 and the assembly member 200A, it is not necessary to open the pack housing cover 600 (see Fig. 1) in the process of replacing the venting member 300. That is, there is an advantage in that the venting member 300 can be replaced while maintaining a sealed state between the pack housing 200 and the pack housing cover 600.

Meanwhile, referring to Fig. 1 again, the battery pack 1000 according to the present embodiment includes various control and protection systems such as a battery disconnect unit (BDU) module 800, a battery management system (BMS) module 900, and a cooling system. The BDU module 800 forms a high voltage (HV) line with the battery modules 100, and performs the function of stably supplying or cutting off power to the power system of the device and protecting the power system of the device when a fault current occurs. The BMS module 900 forms a low voltage (LV) line with the battery modules 100 and performs the function of controlling the temperature or voltage of each battery module 100 based on the measured temperature or voltage data.

The battery pack can be applied to various devices. For example, it can be applied to vehicle means such as an electric bike, an electric vehicle, and a hybrid electric vehicle, and may be applied to various devices capable of using a secondary battery, without being limited thereto.

The terms representing directions such as the front side, the rear side, the left side, the right side, the upper side, and the lower side have been used in the present embodiment, but the terms used are provided simply for convenience of description and may become different according to the position of an object, the position of an observer, or the like.

Although preferred embodiments of the present disclosure have been shown and described above, the scope of the present disclosure is not limited thereto, and numerous changes and modifications can be devised by those skilled in the art using the principles of the invention defined in the appended claims, which also falls within the spirit and scope of the present disclosure.

### [Description of Reference Numerals]

1000: battery pack
100: battery module
200: pack housing
300: venting member
400a: fixed bolt part
400b: outer bolt part
500a: outer nut part
500b: fixed nut part

## Claims

1. A battery pack comprising:
a battery module that houses battery cells and discharges gas generated from the battery cells;
a pack housing that houses the battery module and is provided with an outlet port for discharging gas discharged from the battery module at one surface thereof; and
a venting member that covers the outlet port at an outer surface of the pack housing, couples to the outer surface of the pack housing, and discharges gas inside the pack housing,
wherein the venting member is detachably coupled to the outer surface of the pack housing.

2. The battery pack according to claim 1 further comprising:
a fastening part that couples the pack housing and the venting member,
wherein the fastening part comprises a bolt part passing through the venting member and a nut part into which the bolt part is inserted and fastened, and
any one of the bolt part or the nut part contacts and couples to one surface of the pack housing, and the other is detachably fastened to any one of the bolt part or the nut part at the outside of the pack housing.

3. The battery pack according to claim 2, wherein:
the bolt part comprises a fixed bolt part configured to contact and couple to one surface of the pack housing, and
the nut part comprises an outer nut part detachably fastened to the fixed bolt part at the outside of the pack housing.

4. The battery pack according to claim 3, wherein:
a housing hole is formed in the pack housing, and
the fixed bolt part passes through the housing hole while contacting and coupling to the inner surface of the pack housing.

5. The battery pack according to claim 4, wherein:
the fixed bolt part comprises a head part configured to contact and couple to the inner surface of the pack housing and a screw part extending from the head part and passing through the housing hole.

6. The battery pack according to claim 3, wherein:
the fixed bolt part contacts and couples to the outer surface of the pack housing.

7. The battery pack according to claim 3, wherein:
a through hole is formed in the venting member, and
the fixed bolt part passes through the through hole to be fastened to the outer nut part.

8. The battery pack according to claim 3, wherein:
the fixed bolt part is coupled to one surface of the pack housing by a welding junction or an adhesive.

9. The battery pack according to claim 2, wherein:
the nut part comprises a fixed nut part configured to contact and couple to the inner surface of the pack housing, and
the bolt part comprises an outer bolt part detachably fastened to the fixed nut part at the outside of the pack housing.

10. The battery pack according to claim 9, wherein:
a housing hole is formed in the pack housing, and
the fixed nut part contacts and couples to the inner surface of the pack housing so as to cover the housing hole.

11. The battery pack according to claim 10, wherein:
the fixed nut part comprises a columnar main body formed with screw threads on the inner surface, and an attachment part configured to extend from the main body part and contact and couple to the inner surface of the pack housing.

12. The battery pack according to claim 10, wherein:
a through hole is formed in the venting member, and
the outer bolt part sequentially passes through the through hole and the housing hole to be fastened to the fixed nut part.

13. The battery pack according to claim 9, wherein:
the fixed nut part is coupled to one surface of the pack housing by a welding junction or an adhesive.

14. The battery pack according to claim 1, wherein:
the venting member is slidably and detachably coupled to the outer surface of the pack housing.

15. The battery pack according to claim 1, wherein:
the pack housing comprises an assembly member having one end fixed to an outer surface of the pack housing,
an assembly groove is formed in the venting member, and an assembly protrusion is formed in the assembly member, and
the assemble member rotates in a direction in which the venting member is located, and the assembly protrusion engages with the assemble groove, so that the assemble member and the venting member are coupled.

16. The battery pack according to claim 1, wherein:
the venting member comprises a venting cap in which a venting hole is formed, a support ring in contact with the pack housing and a rupture disk located between the venting cap and the support ring.

17. The battery pack according to claim 1, further comprising:
a pack housing cover that covers an opened upper part of the pack housing.

18. A device comprising the battery pack according to claim 1.
